# FASCICULE DE BREVET EUROPEEN

(11) **EP 1 637 780 B1**
(45) Date de publication et mention de la délivrance du brevet: **03.09.2008**
(21) Numéro de dépôt: 05015831.0
(22) Date de dépôt: 21.07.2005
(51) Int. Cl.: F16J 15/08

(54) **Joint comprenant au moins une nervure incorporant un limiteur d'écrasement**
Dichtung mit mindestens einem Wulst mit integriertem Begrenzer
Gasket comprising at least a bead including a compression stopper

(30) Priorité: 21.09.2004 FR 0452104
(43) Date de publication de la demande: 22.03.2006
(73) Titulaire: Carl Freudenberg KG, 69469 Weinheim (DE)
(72) Inventeur: Burg, Jean-Pascal, 87150 Saint-Gence (FR)

(56) Documents cités:
- EP-A- 0 773 392
- EP-A- 0 834 687
- EP-A- 1 555 466
- WO-A-00/79156
- WO-A-01/96768
- US-A- 5 711 537

## Description

La présente invention se rapporte à un joint comprenant au moins une nervure incorporant un limiteur d'écrasement, ledit joint étant plus particulièrement destiné à être utilisé en tant que joint de culasse.

Un joint de culasse, disposé entre un bloc moteur et une culasse, comprend généralement une ou plusieurs feuilles métalliques comportant des ouvertures susceptibles de coopérer avec les chambres de combustion et des orifices permettant le passage de fluides ou des moyens de serrage tels que des tiges filetées.

L'invention se rapporte plus particulièrement aux joints de culasse dits dynamiques susceptibles de s'adapter d'une part aux variations de l'écartement e entre le bloc moteur et la culasse en raison notamment des phénomènes de déformation-dilatation, et d'autre part, aux variations géométriques telles que l'état de surface, le parallélisme, la planéité ou autres, qui sont susceptibles de varier d'un bloc moteur à l'autre ou d'une culasse à l'autre.

*C*e type de joint comprend généralement une nervure susceptible d'entourer les ouvertures et/ou les orifices de manière à former une barrière d'étanchéité. Pour l'ensemble de la description, on entend par nervure un profil ayant une section transversale avec une partie centrale susceptible d'être en contact avec une première surface à étancher, directement ou indirectement par l'intermédiaire d'un ou plusieurs éléments, et deux pieds, disposés de part et d'autre de la partie centrale, susceptibles d'être en contact avec la seconde surface à étancher, directement ou indirectement par l'intermédiaire d'un ou plusieurs éléments. Généralement, une nervure a un profil en forme d'oméga. En fonction des cas, la partie centrale peut être courbe ou comprendre une portion rectiligne. De même, la nervure peut s'étendre longitudinalement selon une forme circulaire ou non en fonction de la zone à étancher.

Lorsque le joint est disposé entre le bloc moteur et la culasse, la nervure est légèrement comprimée et se déforme de manière à s'adapter à la géométrie des différents éléments. En raison de son élasticité, la nervure est susceptible de se déformer lors du fonctionnement pour s'adapter aux variations de l'écartement e entre le bloc moteur et la culasse, la partie centrale conservant le contact avec la culasse directement ou indirectement et les pieds conservant le contact avec le bloc moteur directement ou indirectement, ou vice versa la partie centrale étant susceptible d'être en contact avec le bloc moteur ou la culasse indifféremment.

De manière à conserver l'élasticité de la nervure et ne pas atteindre sa déformation plastique lors du montage ou en fonctionnement, on prévoit généralement de manière adjacente un limiteur d'écrasement, appelé stoppeur lorsque ce dernier est intercalé entre la nervure et une ouverture adaptée à une chambre de combustion.

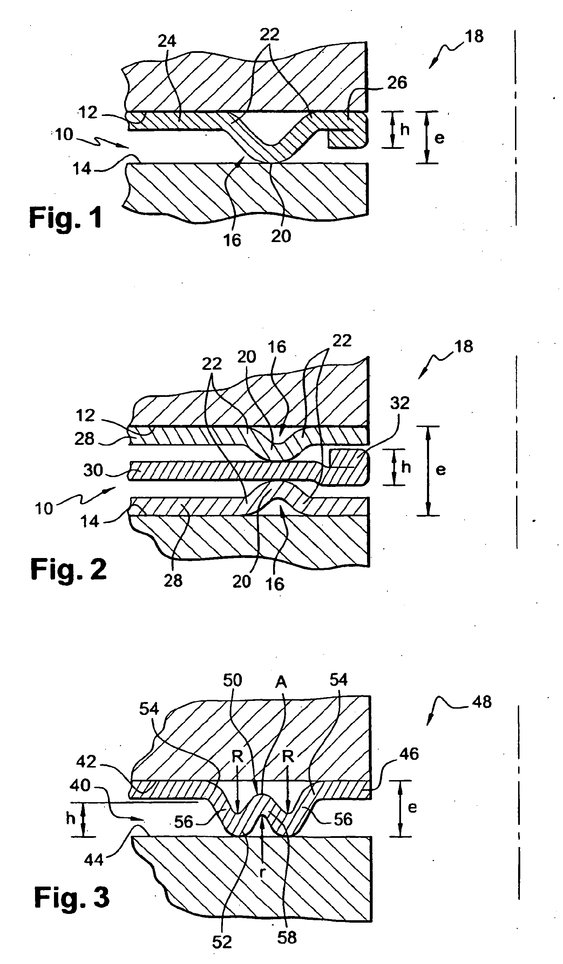

Sur les figures 1 et 2, on a représenté un joint 10 de l'art antérieur, susceptible d'être disposé entre une première surface à étancher 12 et une seconde surface à étancher 14, comprenant au moins une nervure 16 disposée à proximité d'une ouverture 18. La partie centrale de la nervure est référencée 20 et les pieds 22.

Selon un premier mode de réalisation, illustré par la figure 1, le joint 10 comprend une seule tôle 24 dans laquelle est ménagée une nervure 16, les pieds 22 de la nervure étant en contact avec la première surface à étancher 12 et la partie centrale 20 étant en contact avec la seconde surface à étancher 14. Afin de limiter l'écrasement de la nervure 16, le joint 10 comprend de manière adjacente à la nervure, intercalé entre ladite nervure et l'ouverture, un stoppeur 26 sous forme par exemple d'un pli ménagé au niveau du bord de la tôle délimitant l'ouverture.

Selon un autre mode de réalisation, illustré par la figure 2, le joint 10 comprend d'une part, au moins une tôle dite active 28 et de préférence deux, chacune comprenant une nervure 16 dont les parties centrales sont orientées l'une vers l'autre, et d'autre part, une tôle intercalaire 30 disposée entre les tôles actives ou en contact avec la partie centrale de la nervure de la tôle active, ladite tôle intercalaire supportant un stoppeur 32, disposé de manière adjacente à la ou aux nervures, par exemple disposé bord à bord avec ladite tôle intercalaire ou sous forme d'un pli ménagé au niveau du bord délimitant l'ouverture comme illustré par la figure 2.

Pour obtenir une répartition des efforts de compression sensiblement uniforme, la hauteur h du stoppeur 26 ou 32 peut varier longitudinalement.

Afin de réduire les coûts de fabrication tout en conservant une excellente étanchéité, on tend à privilégier les solutions comprenant une seule tôle, comme par exemple le joint métallique divulgué dans le document EP-A-0 834 687.

Toutefois même dans ce cas, on note que la réalisation du limiteur d'écrasement est généralement problématique et génère des surcoûts.

Aussi, la présente invention vise à pallier les inconvénients de l'art antérieur en proposant un nouveau joint de conception simple, permettant de réduire les coûts de fabrication, sans affecter les capacités d'étanchéité.

A cet effet, l'invention a pour objet un joint susceptible d'être incorporé entre deux surfaces à étancher, comprenant au moins une tôle avec au moins une nervure comportant selon une section transversale d'une part, une partie centrale susceptible d'être en contact avec une des surfaces à étancher, directement ou indirectement, et d'autre part, des pieds disposés de part et d'autre de la partie centrale, susceptibles d'être en contact avec l'autre surface à étancher, directement ou indirectement, caractérisé en ce que la partie centrale de la nervure a au moins une forme assurant la fonction de limiteur d'écrasement.

En incorporant le limiteur d'écrasement à la nervure, on peut réaliser en une seule opération simple ces deux éléments ce qui permet d'optimiser le procédé de réalisation d'un tel joint et de réduire les coûts de fabrication tout en conservant une excellente étanchéité.

D'autres caractéristiques et avantages ressortiront de la description qui va suivre de l'invention, description donnée à titre d'exemple uniquement, en regard des dessins annexés sur lesquels:
- la figure 1 est une coupe transversale illustrant un premier mode de réalisation d'un joint selon l'art antérieur,
- la figure 2 est une coupe transversale illustrant un autre mode de réalisation d'un joint selon l'art antérieur,
- la figure 3 est une coupe transversale illustrant un joint selon l'invention intercalé entre deux surfaces à étancher,
- la figure 4 est une coupe transversale illustrant en détail la section de la nervure d'un joint selon l'invention,
- la figure 5 est une vue de dessus d'une partie d'un joint selon l'invention,
- les figures 6A à 6M illustrent différentes variantes de joints selon l'invention, et
- la figure 7 est une courbe illustrant les déformations d'une nervure selon l'invention.

Sur la figure 3, on a représenté en 40 un joint selon l'invention, susceptible d'être intercalé entre une première et une seconde surfaces à étancher, par exemple une culasse 42 et un bloc moteur 44 dans le cas d'un joint de culasse. Bien entendu, l'invention n'est pas limitée à cette application et couvre au contraire toutes les applications nécessitant un joint sensiblement plat.

Selon les cas, la distance séparant les deux surfaces à étancher 42 et 44, appelée écartement e peut varier en fonctionnement.

Le joint 40 comprend au moins une feuille ou plaque, appelée tôle 46, de préférence métallique, revêtue ou non.

Le joint comprend au moins une ouverture et/ou orifice 48 de manière à faire communiquer des conduits débouchant respectivement au niveau de chaque surface à étancher. Dans le cas d'un joint de culasse, le joint comprend au moins une ouverture susceptible de coopérer avec une chambre de combustion et des orifices permettant le passage de fluides ou des moyens de serrage tels que des tiges filetées.

De manière connue, le joint comprend au moins une barrière d'étanchéité, de préférence dynamique, sous forme d'une nervure 50.

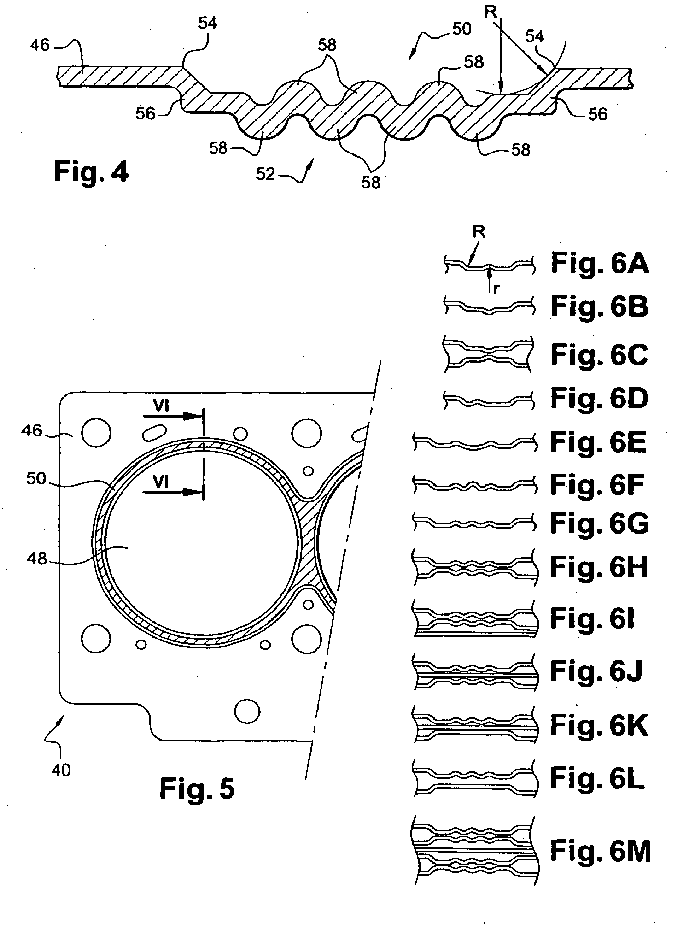

Selon les cas, la nervure 50 s'étend de manière continue ou non, de manière circulaire ou non. A titre d'exemple, la nervure 50 peut entourer une ouverture 48 prévue pour une chambre de combustion comme illustré par la figure 5. Dans ce cas, la nervure peut être sensiblement circulaire et être disposée à une distance sensiblement constante du bord du joint délimitant l'ouverture 48.

Selon une section transversale, la nervure 50 comprend d'une part, une partie centrale 52 susceptible d'être en contact, notamment lors du montage, avec une des surfaces à étancher, directement ou indirectement, à l'occurrence en contact direct avec le bloc moteur 44, et d'autre part, des pieds 54 disposés de part et d'autre de la partie centrale 52, susceptibles d'être en contact avec l'autre surface à étancher, directement ou indirectement, à l'occurrence en contact direct avec la culasse 42.

Deux branches 56, plus ou moins inclinées, sont prévues, susceptibles de relier chacune la partie centrale 52 avec l'un des pieds 54. En complément, les pieds 54 comprennent chacun une portion droite reliée au reste de la tôle 46 et une portion courbe reliant la portion droite à une des branches 56 de la partie centrale.

De manière à conserver l'élasticité de la nervure 50 et limiter son écrasement lors du montage ou en fonctionnement, le joint 40 comprend un limiteur d'écrasement.

Selon l'invention, la nervure 50, de préférence la partie centrale 52, comprend un limiteur d'écrasement. Selon l'invention, la section transversale de la partie centrale 52 a au moins une forme assurant la fonction de limiteur d'écrasement. A cet effet, comme illustré sur la figure 3, la partie centrale 52 comprend au moins une ondulation 58. L'invention n'est pas limitée à cette forme, le limiteur d'écrasement étant susceptible d'avoir une forme en créneau ou triangulaire ou autre. Une partie centrale peut comprendre une combinaison de toutes ces formes.

Selon une autre caractéristique de l'invention, la liaison entre les pieds 54 et la partie centrale 52 de la nervure peut se déformer de manière élastique afin de plaquer la crête A de ladite au moins une ondulation 58 contre la surface à étancher en contact avec les pieds 54 de la nervure, notamment en fonctionnement. Cet agencement permet d'améliorer l'étanchéité, chaque crête A formant une barrière d'étanchéité. Ainsi, en fonctionnement, la ou les crêtes A ainsi que les pieds de la nervure sont en contact avec une première surface à étancher alors qu'au moins les zones de liaison entre les branches 56 et la partie centrale 52 sont en contact avec l'autre surface à étancher.

Selon une autre caractéristique de l'invention, le rayon de courbure R de la zone de liaison entre les branches 56 et la partie centrale 52 est supérieur au rayon de courbure r de la ou des ondulations 58. Ainsi, le rayon de courbure R facilite les déformations élastiques alors que le rayon de courbure r limite les déformations élastiques. Cet agencement permet d'obtenir un bon compromis entre la résistance à la déformation afin d'éviter l'écrasement total de la nervure et l'élasticité de la nervure qui garantit l'étanchéité.

Par rayon de courbure, on entend une courbure réelle telle qu'illustrée sur la figure 3, ou une courbure imaginaire correspondant au cercle imaginaire tangent à deux pans successifs inclinés comme illustré sur la figure 4 pour le rayon de courbure R.

Selon une autre variante, la partie centrale 52 peut comprendre plusieurs ondulations 58, comme illustré par la figure 4.

A titre d'exemple, la distance séparant un creux et un sommet adjacents des ondulations varie de l'ordre de 0,4 à 0,8 mm, la hauteur h varie de l'ordre de 0,04 à 0,15 mm en fonction des caractéristiques des éléments à étancher.

Selon une autre caractéristique de l'invention, la résistance à l'écrasement du limiteur d'écrasement ou la répartition des efforts de pression peut varier le long de la nervure 50 en ajustant la hauteur et/ou le nombre des ondulations.

*O*n peut aussi fractionner le limiteur d'écrasement.

Selon les variantes, le joint 40 peut comprendre une tôle 46, comme illustré sur les figures 6A, 6B, 6D, 6E, 6F et 6G ou deux tôles 46, comme illustré sur les figures 6C, 6H et 6L ou plus de deux tôles 46, comme illustré par les figures 6I, 6J, 6K et 6M.

Selon les cas, la partie centrale peut comprendre une ondulation, comme illustré sur les figures 6A à 6D, ou plusieurs, comme illustré sur les autres figures.

Les ondulations peuvent être centrées par rapport à la partie centrale ou non comme illustré sur la figure 6D.

Les ondulations peuvent être toutes identiques ou non comme illustré par la figure 6F.

La ou les ondulations peuvent être orientées vers une première direction, comme illustré par la figure 6A, ou vers une seconde direction, comme illustré par la figure 6B.

En fonction des cas, le rayon de courbure des ondulations peut être plus ou moins serré, comme illustré par les figures 6E et 6G.

Pour les variantes incorporant au moins deux tôles les nervures sont orientées l'une vers l'autre, comme illustré par les figures 6C, 6H, 6I, 6J, 6K, 6L et 6M, ou non.

Les tôles nervurées peuvent comprendre des ondulations au niveau de chaque nervure, comme illustré par les figures 6C, 6H, 6I, 6J et 6M ou seulement sur une, comme illustré par les figures 6K et 6L.

De plus, une tôle plate peut être prévue entre les tôles nervurées comme illustré par les figures 6J et 6K ou plaquée contre l'une des tôles nervurées comme illustré sur la figure 6I.

Bien entendu, tous les agencements ne sont pas représentés et peuvent varier à l'infini.

Selon un mode de réalisation préféré, le profil de la nervure incorporant le limiteur d'écrasement est réalisé en une seule opération grâce par exemple à une opération de matriçage.

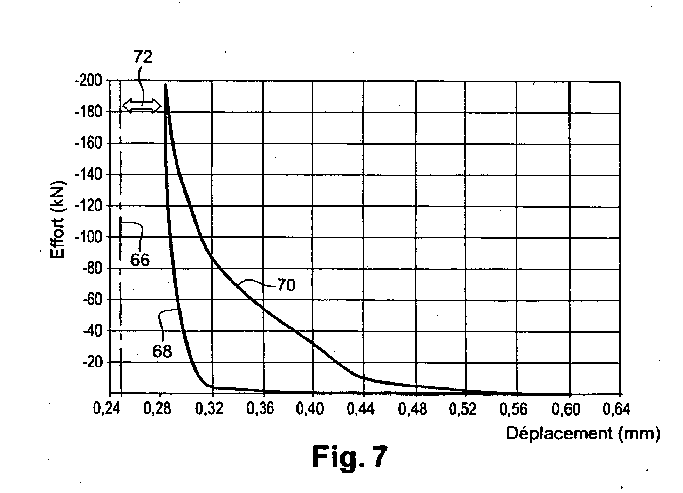

Sur la figure 7, on a représenté à titre d'exemple un essai de compression d'une tôle comprenant une nervure incorporant un limiteur d'écrasement selon l'invention. Cet essai a été réalisé avec une tôle d'épaisseur de l'ordre de 0,25 mm avec un limiteur d'écrasement de hauteur h de l'ordre de 0,05 mm.

Cet essai de compression a été réalisé sous une charge de 200 KN, courbe 66 c'est-à-dire une valeur supérieure à celle qui peut être générée par le serrage normal de la culasse sur le bloc moteur.

On note que la courbe 68 correspondant à la décharge se situe au-dessus de la valeur de l'épaisseur de la tôle représentée en 70 et qu'ainsi, la fonction butée est bien assurée par la présente invention. Cette valeur de butée est symbolisée graphiquement en 72.

Bien entendu, l'invention n'est évidemment pas limitée au mode de réalisation représenté et décrit ci-dessus, mais en couvre au contraire toutes les variantes, notamment en ce qui concerne les dimensions et les formes des différents éléments.

Enfin, les joints selon l'invention ne sont pas limités au domaine des joints de culasse mais peuvent être utilisés dans d'autres applications.

## Revendications

1. Joint susceptible d'être incorporé entre deux surfaces à étancher (42, 44), comprenant au moins une tôle (46) avec au moins une nervure d'étanchéité (50) comportant selon une section transversale d'une part, une partie centrale (52) susceptible d'être en contact avec une des surfaces à étancher, directement ou indirectement, et d'autre part, des pieds (54) disposés de part et d'autre de la partie centrale (52), susceptibles d'être en contact avec l'autre surface à étancher, directement ou indirectement, **caractérisé en ce que** la partie centrale de la nervure d'étanchéité (50) a au moins une forme assurant la fonction de limiteur décroisement (58).

2. Joint selon la revendication 1, **caractérisé en ce que** la liaison entre les pieds (54) et la partie centrale (52) de la nervure d'étanchéité peut se déformer de manière élastique afin de plaquer ledit limiteur d'écrasement (58) contre la surface à étancher en contact avec les pieds (54) de la nervure d'étanchéité en fonctionnement.

3. Joint selon la revendication 1 ou 2, **caractérisé en ce que** la partie centrale de la nervure d'étanchéité (50) comprend au moins une ondulation (58), au moins un créneau et/ou au moins une forme en triangle

4. Joint selon la revendication 3, **caractérisé en ce que** la zone de liaison entre les branches (56) et la partie centrale (52) forme un rayon de courbure R supérieur au rayon de courbure r de la ou des ondulations (58).

5. Joint selon l'une quelconque des revendications 1 à 4, **caractérisé en ce que** la hauteur h du limiteur d'écrasement (58) est de l'ordre de 0,04 à 0,15 mm.

6. Joint selon l'une quelconque des revendications 3 à 5, **caractérisé en ce que** la hauteur et/ou le nombre d'ondulations peut varier le long de la nervure d'étanchéité.

7. Joint selon l'une quelconque des revendications précédentes, **caractérisé en ce que** le limiteur d'écrasement est fractionné.

## Claims

1. Gasket that can be incorporated between two surfaces (42, 44) that are to be sealed, comprising at least one sheet (46) with at least one sealing bead (50) comprising, in cross section, on the one hand, a central part (52) capable of being in contact with one of the surfaces that are to be sealed, directly or indirectly and, on the other hand, legs (54) positioned on each side of the central part (52) and capable of being in contact with the other surface that is to be sealed, directly or indirectly, **characterized in that** the central part of the sealing bead (50) has at least one shape that acts as a compression limiter (58).

2. Gasket according to Claim 1, **characterized in that** the connection between the legs (54) and the central part (52) of the sealing bead can deform elastically so as to press the said compression limiter (58) firmly against the surface that is to be sealed in contact with the legs (54) of the sealing bead in operation.

3. Gasket according to Claim 1 or 2, **characterized in that** the central part of the sealing bead (50) comprises at least one corrugation (58), at least one crenulation and/or at least one triangle shape.

4. Gasket according to Claim 3, **characterized in that** the region of connection between the branches (56) and the central part (52) forms a radius of curvature R greater than the radius of curvature r of the corrugation or corrugations (58).

5. Gasket according to any one of Claims 1 to 4, **characterized in that** the height h of the compression limiter (58) is of the order of 0.04 to 0.15 mm.

6. Gasket according to any one of Claims 3 to 5, **characterized in that** the height and/or the number of corrugations can vary along the length of the sealing bead.

7. Gasket according to any one of the preceding claims, **characterized in that** the compression limiter is fractionated.

## Patentansprüche

1. Dichtung, die zwischen zwei abzudichtenden Oberflächen (42, 44) eingebaut werden kann, die wenigstens ein Blech (46) mit wenigstens einer Dichtungsrippe (50) enthält, die im Querschnitt einerseits einen Mittelteil (52), der mit einer der abzudichtenden Oberflächen direkt oder indirekt in Kontakt gelangen kann, und andererseits Füße (54), die beiderseits des Mittelteils (52) angeordnet sind und mit der anderen abzudichtenden Oberfläche direkt oder indirekt in Kontakt gelangen können, enthält, **dadurch gekennzeichnet, dass** der Mittelteil der Dichtungsrippe (50) wenigstens eine Form hat, die die Funktion der Stauchungsbegrenzung (58) gewährleistet.

2. Dichtung nach Anspruch 1, **dadurch gekennzeichnet, dass** sich die Verbindung zwischen den Füßen (54) und dem Mittelteil (52) der Dichtungsrippe elastisch verformen kann, um den Stauchungsbegrenzer (58) gegen die abzudichtende Fläche zu drängen, die mit den Füßen (54) der verwendeten Dichtungsrippe in Kontakt ist.

3. Dichtung nach Anspruch 1 oder 2, **dadurch gekennzeichnet, dass** der Mittelteil der Dichtungsrippe (50) wenigstens eine Wellenlinie (58), wenigstens eine Spitze und/oder wenigstens eine Dreieckform enthält.

4. Dichtung nach Anspruch 3, **dadurch gekennzeichnet, dass** die Verbindungszone zwischen den Schenkeln (56) und dem Mittelteil (52) einen Krümmungsradius R bildet, der größer als der Krümmungsradius r der Wellenlinie(n) (58) ist.

5. Dichtung nach einem der Ansprüche 1 bis 4, **dadurch gekennzeichnet, dass** die Höhe h des Stauchungsbegrenzers (58) in der Größenordnung von 0,04 bis 0,15 mm liegt.

6. Dichtung nach einem der Ansprüche 3 bis 5, **dadurch gekennzeichnet, dass** die Höhe und/oder die Anzahl der Wellenlinien längs der Dichtungsrippe variieren kann.

7. Dichtung nach einem der vorhergehenden Ansprüche, **dadurch gekennzeichnet, dass** der Stauchungsbegrenzer unterteilt ist.
